Europäisches Patentamt

European Patent Office

Office européen des brevets

(11) Numéro de publication: **0 202 978**
**B1**

(12) **FASCICULE DE BREVET EUROPEEN**

(45) Date de publication du fascicule du brevet: **04.07.90**

(21) Numéro de dépôt: **86400805.7**

(22) Date de dépôt: **15.04.86**

(51) Int. Cl.⁵: **F 02 P 5/04, G 01 L 23/22**

(54) **Dispositif de détection de cliquetis à auto-adaptation de seuil.**

(30) Priorité: **16.04.85 FR 8505739**

(43) Date de publication de la demande:
**26.11.86 Bulletin 86/48**

(45) Mention de la délivrance du brevet:
**04.07.90 Bulletin 90/27**

(84) Etats contractants désignés:
**DE GB IT**

(56) Documents cités:
**FR-A-2 398 895**
**FR-A-2 449 798**
**FR-A-2 504 592**
**GB-A-2 107 785**
**US-A-3 950 981**

(73) Titulaire: **SOLEX**
**19, rue Lavoisier**
**F-92002 Nanterre Cédex (FR)**

(72) Inventeur: **Boucly, Bernard**
**78, rue de Glatigny**
**F-78150 Le Chesnay (FR)**
Inventeur: **Nader, Jean Pierre**
**17, allée du Mali**
**F-94260 Fresnes (FR)**

(74) Mandataire: **Fort, Jacques et al**
**CABINET PLASSERAUD 84, rue d'Amsterdam**
**F-75009 Paris (FR)**

Courier Press, Leamington Spa, England.

## Description

L'invention concerne un dispositif de détection du cliquetis d'un moteur à combustion interne, du type comprenant un capteur sensible aux vibrations aux fréquences de cliquetis, des moyens de filtrage analogique du signal électrique de sortie du capteur et un comparateur recevant, sur une entrée, le signal électrique filtré et redressé et, sur l'autre entrée, un seuil de détection représentatif de la valeur moyenne du signal filtré, élaboré par un circuit comportant un intégrateur de constante de temps suffisante pour fournir un signal de sortie lissé représentatif du bruit du moteur.

Un tel dispositif est décrit dans le document FR—A—2 504 592. Ce document concerne un procédé et un appareil pour détecter le cognement dans un moteur. Il prévoit de séparer les signaux correspondant aux vibrations engendrées par le cognement du moteur des signaux correspondant au bruit de fond en se basant sur les formes d'onde des signaux détectés correspondant aux vibrations du moteur.

On connait également des dispositifs de détection du cliquetis comprenant un capteur (accéléromètre en général) sensible aux vibrations aux fréquences de cliquetis, des moyens de filtrage analogique passe-haut ou passe-bande du signal électrique de sortie du capteur et un comparateur recevant, sur une entrée, les valeurs de crête du signal filtré et, sur l'autre entrée, un seuil de détection représentatif de la valeur moyenne du signal filtré. Dans les dispositifs connus, la valeur de crête est fréquemment élaborée par un redresseur suivi d'un intégrateur à faible constante de temps, tandis que la valeur moyenne est élaborée par un redresseur suivi d'un intégrateur à plus forte constante de temps. Le rapport entre les deux constantes de temps est généralement de plusieurs dizaines et peut atteindre 100.

Ces dispositifs connus donnent des résultats à peu près satisfaisants lorsqu'ils sont montés sur un moteur neuf et lorsque le régime du moteur n'est pas trop élevé. Mais la probabilité de fausse alarme augmente avec la puissance du bruit de fond, donc avec le régime et au cours du vieillissement du moteur, sauf ajustement du dispositif. Par ailleurs, la dispersion des caractéristiques des composants du dispisif et le fait que les différents modèles de moteur ne présentent pas le même bruit de fond obligent à prévoir des moyens d'ajustement sur le dispositif. On a tenté d'écarter cette difficulté en prévoyant, en amont du filtre, un amplificateur à commande automatique de gain (amplificateur à transmittance variable en général) commandé par le signal représentatif du bruit. Effectivement, on arrive à constituer ainsi un dispositif peu sensible aux dispersions de caractéristiques des composants. Mais on ne résout pas complètement le problème du fait que la puissance du bruit devient prépondérante à haut régime et que le rapport signal/bruit se détériore.

Un autre dispositif de détection du cliquetis d'un moteur est connu par le document US—A—3 822 583. Ce dispositif prévoit un seuil élaboré par un intégrateur recevant le signal filtré de la sortie du capteur.

L'invention vise à fournir un dispositif de détection de cliquetis du type ci-dessus défini permettant de conserver une sensibilité élevée de détection du cliquetis quel que soit le régime et quel que soit le bruit du moteur, le seuil de détection étant automatiquement ajusté en fonction de la puissance du bruit.

Dans ce but, l'invention propose un dispositif du type ci-dessus défini, caractérisé en ce que le circuit comprend, en amont de l'intégrateur, un sommateur recevant, sur une entrée, le signal filtré et, sur une seconde entrée, le signal filtré et redressé.

Le sommateur remplit également le rôle d'un intégrateur à constante de temps élevée. Sa tension de sortie est donc lissée par rapport au signal d'entrée. En conséquence, le comparateur reçoit une consigne de seuil de détection du cliquetis qui est l'image du niveau de bruit moyen du moteur. Le dispositif s'adapte ainsi de lui-même à n'importe quel type de moteur sur lequel il est placé, sans qu'il y ait à effectuer aucun réglage. De plus, le seuil de détection s'ajuste automatiquement à l'évolution du niveau de bruit du moteur, notamment à l'augmentation de ce bruit au cours de l'usure du moteur.

Le dispositif comprend avantageusement, en amont des moyens de filtrage un amplificateur à gain variable dont le gain est commandé par un circuit comportant un détecteur de crête du signal filtré et redressé et un intégrateur fournissant la valeur moyenne du signal de sortie du détecteur de crête. En règle générale, ce dernier intégrateur pourra avoir une constante de temps d'environ 0,6 s., supérieure d'un ordre de grandeur à la constante de temps de l'intégrateur qui suit le sommateur

L'invention sera mieux comprise à la lecture de la description qui suit d'un mode particulier d'exécution de l'invention, donné à titre d'exemple non limitatif. La description se réfère aux dessins qui l'accompagnent, dans lesquels:

la Figure 1 est un synoptique de principe du dispositif;

la Figure 2 est un schéma électrique donnant une constitution possible d'un redresseur et d'un sommateur utilisables dans le dispositif de la Figure 1.

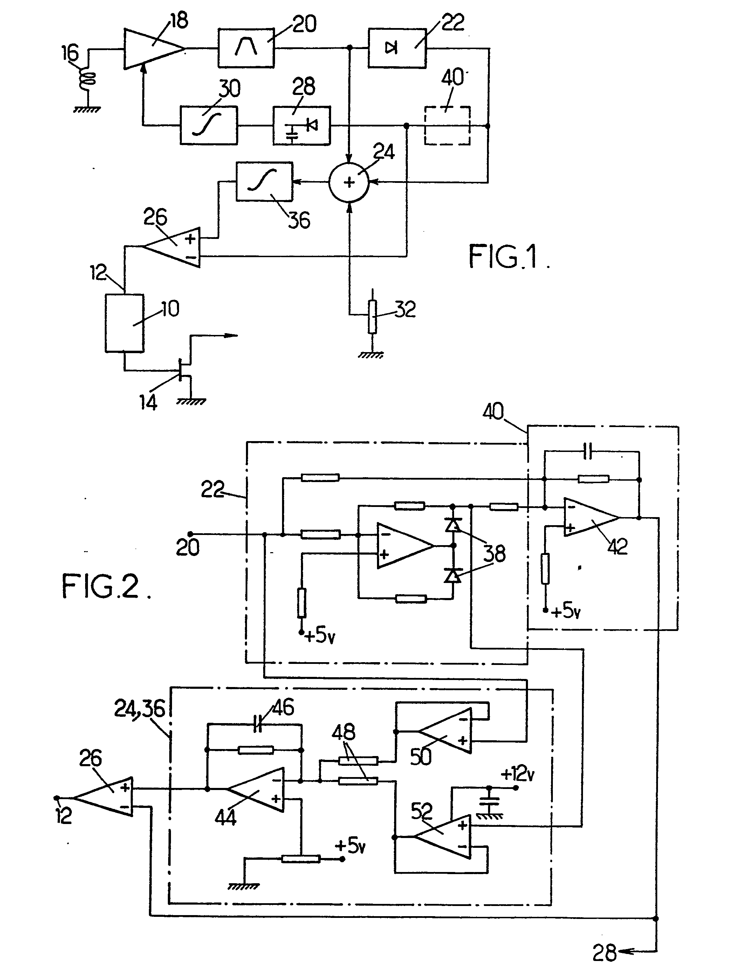

Le dispositif montré en Figure 1 est notamment utilisable en association avec un circuit d'allumage à transistors de type relativement classique. Sur la Figure 1, ce circuit a été représenté comme comportant une carte 10 ayant une entrée 12 de commande d'avance et un transistor de puissance 14 relié au distributeur.

Le dispositif proprement dit comprend un capteur 16, qui sera en général constitué par un accéléromètre, fournissant un signal analogique de sortie représentatif des vibrations dans une plage étendue, comprenant la zone de 5 à 8 kHz où se place l'essentiel de la puissance des vibrations de cliquetis. Le signal de sortie du capteur est appliqué à un amplificateur 18 à commande de gain, qui sera en général un amplificateur à transmittance variable, Le signal de sortie de l'amplificateur 18 attaque un filtre passe-bande 20 destiné à isoler la bande de fréquence dans laquelle se trouve les vibrations de cliquetis. En général, on utilisera un filtre dont la fréquence centrale est d'environ kHz et dont la largeur de bande est de 2 à 3 kHz. Pour avoir une sélectivité suffisante, ce filtre sera généralement actif, à un ou deux étages.

Le signal filtré est appliqué, d'une part, à un redresseur à double alternance 22, d'autre part, à l'une des entrées d'un sommateur 24 dontle rôle apparaitra plus loin. Le signal filtré et redressé fourni par le redresseur 22 est appliqué:

d'une part, à la seconde entrée du sommateur 24,

d'autre part, en tant que signal représentatif du niveau maximum de bruit, à l'entrée moins d'un comparateur 26.

d'autre part encore, à une boucle de réglage automatique de gain.

La bouclede réglage automatique de gain de l'amplificateur 18 comporte un détecteur de crête 28 et un intégrateur 30 à constante de temps relativement longue, typiquement de l'ordre de la demi-seconde.

Le sommateur 24 reçoit encore, sur une troisième entrée, une tension continue ajustable fournie par un potentiomètre 32, A ce sommateur est associé ou intégré un intégrateur 36, dont la constante de temps est nettement plus faible que celle de l'intégrateur 30, mais cependant suffisante pour fournir un signal de sortie représentatif du bruit moteur. L'ensemble sommateur 24 — intégrateur 36 fournit une tension de sortie lissée par rapport au signal d'entrée, et prenant en compte un seuil de calage initial fourni par le potentiomètre 32. Une constante de temps d'environ 50 millisecondes sera généralement satisfaisante pour l'intégrateur 36.

On voit que ce montage permet un auto-ajustement de la valeur de consigne de seuil en fonction du bruit moteur, autour de la tension de référence fournie par le potentiomètre 32. Le comparateur 26 fournira, à chaque passage du signal de sortie du redresseur 22, représentant l'ensemble bruit-vibrations de cliquetis au-dessus du seuil, un créneau qui sera appliqué au circuit 10.

Les composants utilisés pour constituer le dispositif peuvent être pour la plupart absolument classiques, La Figure 2 montre, à titre d'exemple, une constitution possible du redresseur 22 et du sommateur 24.

Le redresseur 22 peut être constitué par un amplificateur opérationnel, par exemple du type TL 084, rebouclé par deux diodes 38. Dans le mode de réalisation illustré, une intégration est effectuée sur le signal de sortie avant de l'appliquer au détecteur de crête 28 et à l'entrée moins du comparateur 26 (aucune intégration n'étant effectuée avant application au sommateur 24). Le circuit d'intégration partielle 40 (montré en tirets sur la Figure I) peut encore être constitué par un amplificateur opèrationnel 42 de type TL 084, dont la bouclede réaction comporte une résistance et un condensateur de faible valeur, par exemple 150 picofarads.

Le signal de sortie n'ayant pas subi d'intégration est appliqué directement au sommateur. Dans le mode de réalisation illustré, ce sommateur comporte trois amplificateurs, par exemple de type 324. L'amplificateur de sortie 44 comporte une boucle de réaction contenant un condensateur 46 et assurant donc la fonction de l'intégrateur 36 de la Figure 1. L'entrée plus reçoit le signal de sortie d'un potentiomètre d'ajustage initial de seuil. L'entrée moins reçoit, par l'intermédiaire de résistances respectives de sommation 48:

le signal de sortie d'un amplificateur 50 qui reçoit le signal filtré provenant du filtre 20,

le signal de sortie d'un amplificateur 52 qui reçoit de son côté le signal redressé, mais n'ayant pas subi d'intégration partielle, provenant du redresseur 22.

**Revendications**

1. Dispositif de détection du cliquetis d'un moteur à combustion interne, ledit dispositif comprenant un capteur (16) sensible aux vibrations aux fréquences de cliquetis, des moyens de filtrage analogique du signal électrique de sortie du capteur et un comparateur (26) recevant, sur une entrée, le signal électrique filtré et redressé et, sur l'autre entrée, un seuil de détection représentatif de la valeur moyenne du signal filtré, élaboré par un circuit comportant un intégrateur (36) de constante de temps suffisante pour fournir un signal de sortie lissé représentatif du bruit du moteur, caractérisé en ce que le circuit comprend, en amont de l'intégrateur (36), un sommateur (24) recevant, sur une entrée, le signal filtré et, sur une seconde entrée, le signal filtré et redressé.

2. Dispositif selon la revendication 1, caractérisé en ce que l'intégrateur (36) a une constante de temps de l'ordre de 50 millisecondes.

3. Dispositif selon la revendication 1 ou 2, caractérisé en ce qu'il comprend, en amont des moyens de filtrage, un amplificateur à gain variable (18) dont le gain est commandé par un circuit comportant un détecteur de crête du signal filtré et redressè (28) et un intégrateur (30) fournissant la valeur moyenne du signal de sortie du détecteur de crête.

4. Dispositif selon la revendication 3 caractérisé en ce que l'intégrateur (30) fournissant une valeur moyenne a une constante de temps supérieure d'un ordre de grandeur à la constante de temps de l'intégrateur d'élaboration de seuil.

5. Dispositif selon l'une quelconque des revendications précédentes, caractérisé en ce que le sommateur comporte une troisième entrée d'application d'une tension de seuil ajustable.

6. Dispositif selon l'une quelconque des revendications précédentes, caractérisé en ce qu'il comporte de plus un circuit (40) d'intégration partielle du signal redressé avant application au comparateur.

7. Dispositif selon l'une quelconque des revendications précédentes, caractérisé en ce que les moyens de filtrage analogique comportent un filtre passe-bande ayant une fréquence centrale d'environ 6 kHz et une largeur de bande de 2 à 3 kHZ.

**Patentansprüche**

1. Klopfdetektor für einen Verbrennungsmotor, wobei der Klopfdetektor einen Sensor (16) umfaßt, der anspricht auf Vibrationen der Klopffrequenzen, Mittel zur analogen Filtrierung des elektrischen Signals, das vom Ausgang des Sensors ausgeht, und einen Komparator (26), der an einem Eingang das filtrierte und berichtigte elektrische Signal aufnimmt und am anderen Eingang einen Detektorschwellwert, der den Mittelwert des filtrierten Signals darstellt, der durch eine Schaltung festgelegt wird, die ein Integriergerät (36) mit einer Zeitkonstante beinhaltet, die ausreicht, um ein geglättetes Ausgangssignal zu liefern, das das Motorgeräusch darstellt, dadurch gekennzeichnet, daß die Schaltung stromaufwärts des Integriergeräts (36) einen Summenbildner (24) aufweist, der an einem Eingang das filtrierte Signal und am anderen Eingang das filtrierte und berichtigte Signal aufnimmt.

2. Klopfdetektor nach Anspruch 1, dadurch gekennzeichnet, daß das Integriergerät (36) eine Zeitkonstante in der Größenordnung von 50 Millisekunden hat.

3. Klopfdetektor nach Anspruch 1 oder 2, dadurch gekennzeichnet, daß er stromaufwärts der Mittel zur Filtrierung einen Verstärker mit variablem Verstärkungsfaktor (18) aufweist, dessen Verstärkungsfaktor durch eine Schaltung gesteuert wird, die einen Kammdetektor für das filtrierte und berichtigte Signal (28) umfaßt, und einen Integrator (30), der den Mittelwert des Ausgangssignals des Kammdetektors liefert.

4. Klopfdetektor nach Anspruch 3, dadurch gekennzeichnet, daß der einen Mittelwert liefernde Integrator (30) eine Zeitkonstante aufweist, die größer ist als die Größenordnung der Zeitkonstanten des Integriergerätes, das den Schwellwert festlegt.

5. Klopfdetektor nach einem der vorhergehenden Ansprüche, dadurch gekennzeichnet, daß der Summenbildner einen dritten Eingang aufweist zum Anlegen einer einstellbaren Schwellspannung.

6. Klopfdetektor nach einem der vorhergehenden Ansprüche, dadurch gekennzeichnet, daß er zusätzlich eine Teilintegrationsschaltung ⟨ berichtigten Signals vor dem Anlegen am Ko rator umfaßt.

7. Klopfdetektor nach einem der vorhergehenden Ansprüche, dadurch gekennzeichnet, daß die Mittel zur analogen Filtrierung ein Bandfilter aufweisen, das eine zentrale Frequenz von etwa 7 kHz und eine Bandbreite von 2 bis 3 kHz hat.

**Claims**

1. Device for detecting knocking in an internal combustion engine, said device comprising a sensor (16) which is responsive to vibration in the knocking frequency band, means for analog filtering of the output electric signal of the sensor and a comparator (26) which receives the filtered and rectified electric signal on one input and a detection threshold representing the mean value of the filtered signal on the other input, the threshold being generated by a circuit which comprises an integrator (36) having a time constant which is sufficient for delivering a smoothened output signal representative of engine noise, characterized in that the circuit further comprises, upstream of the integrator (36), a summer (24) which receives the filtered signal on one input and the filtered and rectified signal on another input.

2. Device according to claim 1, characterized in that the integrator (36) has a time constant of about 50 ms.

3. Device according to claim 1 or 2, characterized in that it further comprises, upstream of the filtering means, a variable gain amplifier (18) whose gain is controlled by a circuit including a detector (28) of the peaks of the filtered and rectified signal and an integrator (30) which delivers the mean value of the output signal of the peak detector.

4. Device according to claim 3, characterized in that the integrator (30) which delivers a mean value has a time constant higher than the time constant of the integrator which generates the threshold by an order of magnitude.

5. Device according to any one of the preceding claims, characterized in that the summer comprises a third input for receiving an adjustable threshold voltage.

6. Device according to any one of the preceding claims, characterized in that it further comprises a circuit (40) for partial integration of the rectified signal before it is applied to the comparator.

7. Device according to any one of the preceding claims, characterized in that the analog filtering means comprise a passband filter having a central frequency of about 7 kHz and a bandwidth of from 2 to 3 kHz.

FIG.1.

FIG.2.